# EUROPEAN PATENT SPECIFICATION

(11) **EP 3 307 558 B1**
(45) Date of publication and mention of the grant of the patent: **18.11.2020**
(21) Application number: 16812119.2
(22) Date of filing: 20.05.2016
(51) Int. Cl.: B60C 19/08, B60C 15/00, B60C 9/14, B60C 9/18, B60C 13/04, B60C 3/06, B60C 15/06

(54) **TIRE HAVING A CONDUCTIVE INSERT**
REIFEN MIT EINEM LEITENDEN EINSATZ
PNEU AYANT UN INSERT CONDUCTEUR

(30) Priority: 15.06.2015 US 201562175489 P
(43) Date of publication of application: 18.04.2018
(73) Proprietor: Bridgestone Americas Tire Operations, LLC, Nashville, TN 37201 (US)
(72) Inventor: KIRBY, James M., Akron, Ohio 44301 (US); DEMETER, Emily A., Aiken, South Carolina 29801 (US); ZEMLA, David J., Canal Fulton, Ohio 44614 (US)
(74) Representative: Oxley, Robin John George
(86) International application number: PCT/US2016/033417
(87) International publication number: WO 2016/204930

(56) References cited:
- EP-A1- 2 014 488
- EP-A2- 2 193 934
- WO-A1-2013/119578
- GB-A- 2 104 011
- JP-A- 2010 159 017
- JP-A- 2014 133 467
- US-A1- 2005 103 412
- US-A1- 2011 186 202
- US-A1- 2013 118 669
- US-A1- 2014 283 964
- US-A1- 2014 373 995

## Description

### FIELD OF INVENTION

The present invention is directed to tires and tire treads featuring conductivity paths for conducting electric charge. More particularly, the present invention is directed to tires having a conductive substance disposed along a body ply.

### BACKGROUND

Known tires contain materials that inhibit the conduction of electric charge. For example, tires having relatively high amounts of silica are known to accumulate static charge, which is undesirable for vehicle operation. Tires having relatively high amounts of silica previously used antennas to dissipate charge. Reference is made to EP 2014488 A1, which discloses a pneumatic tire capable of reducing rolling resistance and discharging static electricity generated during running.

### SUMMARY OF THE INVENTION

In one embodiment, a tire includes a pair of bead regions, including a first bead region and a second bead region. The tire further includes a pair of sidewall regions, including a first sidewall region disposed above the first bead region and a second sidewall region disposed above the second bead region. The tire also has a crown region extending from the first sidewall region to the second sidewall region, and at least one body ply extending from the first bead region, through the pair of sidewall regions and crown region, to the second bead region. The tire also includes at least one circumferential belt in the crown region, disposed radially above the at least one body ply. At least one cap ply is located in the crown region, radially above the at least one circumferential belt. The tire further includes at least one cap ply insert that has a center portion disposed radially above the at least one circumferential belt. The at least one cap ply insert has a pair of end portions including a first end portion and a second end portion, and each of the pair of end portions extend radially below the at least one circumferential belt. The cap ply insert has a volume resistivity of between 4 × 10⁷ Ω-cm and 7 × 10⁷ Ω-cm. The tire also includes a gum strip at least partially disposed in the first sidewall region. The gum strip has a top end disposed between the at least one body ply and the at least one cap ply insert and a bottom end located in the first bead region. The gum strip also has a volume resistivity between 1 x 10⁵ Ω-cm and 5 x 10⁵ Ω-cm and the gum strip has a 300% modulus of between 10-15 MPa.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a schematic drawing showing certain elements of a half section of one embodiment a tire;
**Figure 2** is a more detailed cross-section of a quarter section of the tire of **Figure 1****;** and
**Figure 3** is a cross-section of a bead region and sidewall region of the tire shown in **Figures 1** and **2****.**

### DETAILED DESCRIPTION

The following includes definitions of selected terms employed herein. The definitions include various examples and/or forms of components that fall within the scope of a term and that may be used for implementation. The examples are not intended to be limiting. Both singular and plural forms of terms may be within the definitions.

"Axial" and "axially" refer to a direction that is parallel to the axis of rotation of a tire.

"Circumferential" and "circumferentially" refer to a direction extending along the perimeter of the surface of the tread perpendicular to the axial direction.

"Radial" and "radially" refer to a direction perpendicular to the axis of rotation of a tire.

"Sidewall" as used herein, refers to that portion of the tire between the tread and the bead.

"Tread" as used herein, refers to that portion of the tire that comes into contact with the road or ground under normal inflation and normal load.

While similar terms used in the following descriptions describe common tire components, it is understood that because the terms carry slightly different connotations, one of ordinary skill in the art would not consider any one of the following terms to be purely interchangeable with another term used to describe a common tire component.

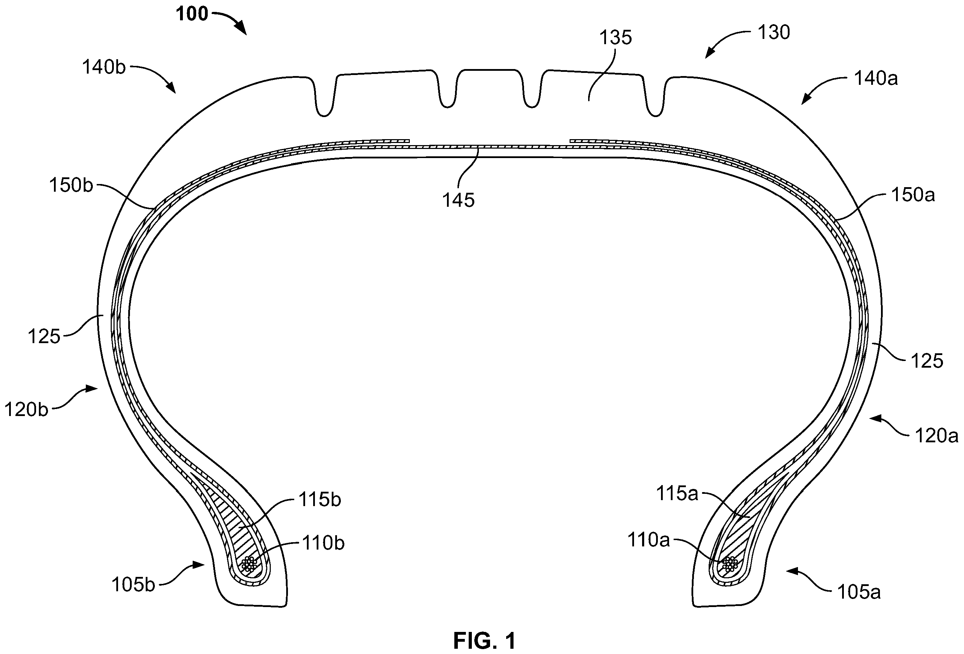

**Figure 1** is a schematic drawing of a half section of a tire **100.** The tire **100** includes a pair of bead regions **105a,b,** including a first bead region **105a** and a second bead region **105b.** Each bead region **105a,b** includes a bead core **110a,b** and a bead filler **115a,b.** In the illustrated embodiment, each bead filler **115a,b** is shown as a single component. In an alternative embodiment (not shown), the bead fillers are formed of two or more components of different material. In another alternative embodiment (not shown), the bead filler is omitted.

The tire **100** further includes a pair of sidewall regions **120a,b.** A first sidewall region **120a is** located above the first bead region **105a** and a second sidewall region **120b is** located above the second bead region **105b.** Each of the sidewall regions **120a,b** includes sidewall rubber **125.**

The tire **100** also includes a crown region **130** extending from the first sidewall region **120a** to the second sidewall region **120b.** The crown region **130** includes a circumferential tread **135.** The circumferential tread may include ribs, blocks, lugs, grooves, sipes, or other tread elements.

A first shoulder region **140a** is a transition region between the first sidewall region **120a** and the crown region **130.** A second shoulder region **140b** is a transition region between the second sidewall region **120b** and the crown region **130.**

A body ply **145** extends from the first bead region **105a**, through the pair of sidewall regions **120** and crown region **130,** to the second bead region 105b. The body ply **145** has a first turn up portion **150a** and a second turn up portion **150b.** In the illustrated embodiment, the first turn up portion **150a** wraps around a first bead core **110a** and a first bead filler **115a,** extends through the first sidewall region **120a** and first shoulder region **140a,** and terminates in the crown region **130.** Likewise, the second turn up portion **150b** wraps around a second bead core **110b** and a second bead filler **115b,** extends through the second sidewall region **120b** and second shoulder region **140b,** and terminates in the crown region **130.** In alternative embodiments (not shown), the first and second turn up portions terminate in the shoulder regions or sidewall regions of the tire. In another alternative embodiment (not shown), the first and second turn up portions terminate in the bead regions. In such an embodiment, the turn up portions may only partially wrap around the bead fillers or the bead cores.

While only a single body ply is shown, it should be understood that multiple body plies may be employed. In such an embodiment, the turn up ends of the different body plies may terminate at different locations.

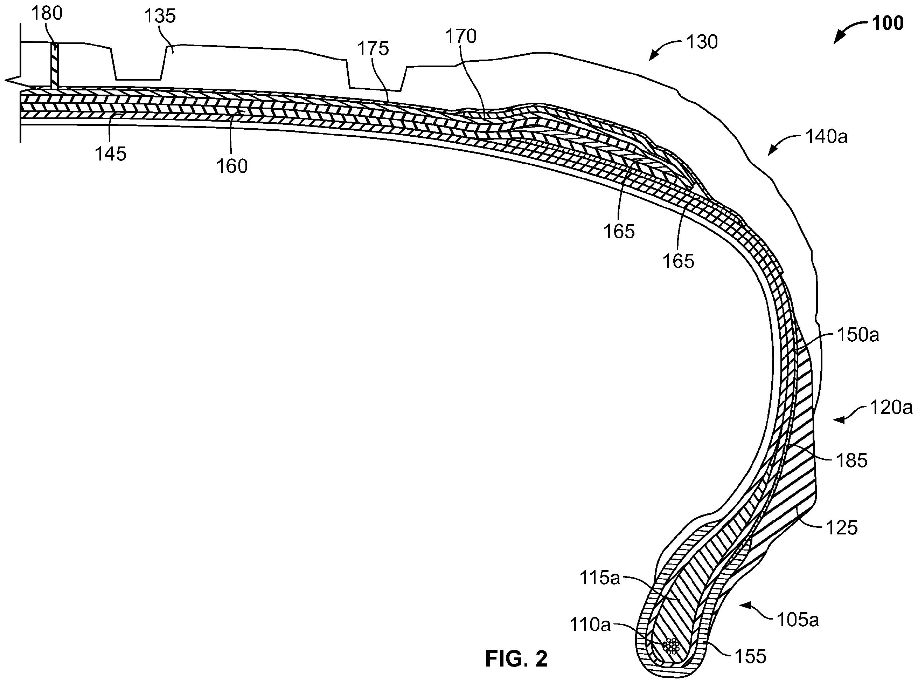

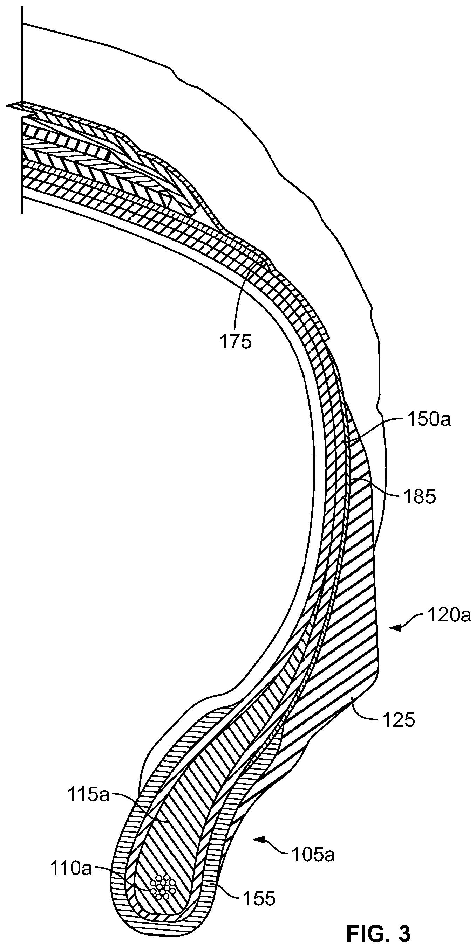

**Figure 2** is a more detailed cross-section of a quarter section of the tire **100.** Additional details can be seen in **Figure 3****,** which is a cross-section of a bead region and sidewall region of the tire shown in **Figure 2****.** The remaining components will be discussed with reference to both **Figures 2** and **3****.**

Each bead region further includes an abrasion **155.** While only the first abrasion **155** of the first bead region **105a** is shown in **Figures 2** and **3****,** it should be understood that the second bead region **105b** includes a similar abrasion. Each abrasion **155** is constructed of a relatively conductive compound that allows electric charge to leave tire **100.** For example, the abrasion may have a resistivity of between 2 × 10⁵ Ω-cm and 5 × 10⁵ Q-cm. In one particular embodiment, the abrasion has a resistivity of 3.5 × 10⁵ Q-cm.

Each abrasion **155** wraps around the bead core **105** and partially wraps around the bead filler **110.** In an alternative embodiment (not shown), the abrasion does not wrap around the bead core, and does not extend to the inside of the bead region.

In the illustrated embodiment, an outer portion of each abrasion **155** abuts the sidewall rubber **125.** In an alternative embodiment (not shown), one or more additional rubber regions may be disposed between the abrasion and the sidewall rubber.

With continued reference to **Figure 2****,** circumferential belts **160** are disposed in the crown region **130,** radially above the body ply **145.** The circumferential belts **160** have a belt width defined by a first end and a second end (not shown in this view). In the illustrated embodiment, two circumferential belts are employed. When multiple belts of different dimensions are employed, the belt width is the width of the longest belt. The circumferential belts may be constructed of steel or another metal. In an alternative embodiment, the circumferential belts may be constructed of nylon or a non-metal polymer. While two circumferential belts are shown in the illustrated embodiment, it should be understood that any number of belts may be employed.

A belt edge insert **165** is disposed under the edge of each belt **160.** In alternative embodiments, one or more of the belt edge inserts may be omitted.

Cap plies **170** are also disposed in the crown region **130** of the tire **100.** The cap plies **170** have a central portion located radially above the circumferential belts **160.** The cap plies **170** have a cap ply width defined by a first end and a second end (not shown in this view). In the illustrated embodiment, the ends of the cap plies **170** are radially below an upper belt, and have substantially the same radial elevation as a lower belt. However, it should be understood that the ends of the cap plies may be radially above or radially below the circumferential belts.

The cap plies may be constructed of nylon or another polymeric material. In the illustrated embodiment, two cap plies are employed. When multiple cap plies are employed, the cap ply width is the width of the longest cap ply. While two circumferential cap plies are shown in the illustrated embodiment, it should be understood that any number of cap plies may be employed.

A cap ply insert **175** is also disposed in the crown region **130.** The cap ply insert **175** has a center portion disposed radially above the cap plies **170** and the circumferential belts **160.** The cap ply insert **175** has a first end portion and a second end portion (not shown) that define a cap ply insert width. The cap ply insert **175** width is greater than the belt width and greater than the cap ply width. The width of the cap ply insert **175** is such that the cap ply insert extends into the shoulder regions **140.** The cap ply insert **175** may even extend into the sidewall regions **120.** Both the first end portion and the second end portion of the cap ply insert **175** extend radially below the circumferential belts **160.** The cap ply insert **175** is constructed of a relatively conductive compound that allows electric charge to leave tire **100.** Therefore, the cap ply insert **175** may also be referred to as a conductive ply. The cap ply insert has a resistivity of between 4 × 10⁷ Ω-cm and 7 × 10⁷ Ω-cm. In one particular embodiment, the cap ply insert has a resistivity of 5.5 × 10⁷ Ω-cm.

An antenna **180** is disposed in a portion of the circumferential tread **135.** In the illustrated embodiment, the antenna **180** is disposed in a middle rib, but it is not limited to a particular location on the tread, and multiple antennas can be used. Antenna **180** extends from the tread surface to the cap ply insert **175.** The antenna **180** is constructed of a relatively conductive compound that allows electric charge to leave tire **100.** For example, the antenna may have a resistivity of between 1 x 10⁵ Ω-cm and 4 × 10⁵ Ω-cm. In one particular embodiment, the abrasion has a resistivity of 2.5 × 10⁵ Ω-cm. In one embodiment, the conductive antenna has a width between 3-6% of the tread width. In another embodiment, the tire lacks a conductive antenna.

A gum strip **185** is at least partially disposed in the first sidewall region **120a,** such that a middle section of the gum strip **185** is disposed between the body ply **145** and the sidewall rubber **125** of the first sidewall region **120a.** More specifically, the middle section of the gum strip **185** is disposed between the first turn up portion **150a of** the body ply **145** and the sidewall rubber **125** of the first sidewall region **120a.**

A top end of the gum strip **185** may extend to the first shoulder region **140a,** or it may terminate in the first sidewall region **120a.** The top end of the gum strip **185** is disposed between the body ply **145** and the cap ply insert **175.** In the illustrated embodiment, the top end of the gum strip **185** is disposed between the cap ply insert **175** and the first turn up portion **150a** of the body ply **145.** In an alternative embodiment (not shown), the top end of the gum strip is disposed between the cap ply insert and a main portion of the body ply. In another alternative embodiment (not shown), the top end of the gum strip is disposed between the cap ply insert and the sidewall rubber.

A bottom end of the gum strip **185** is located in the first bead region **105a.** More particularly, the bottom end of the gum strip **185** is located radially below a top end of the first bead filler **115a.**

In the illustrated embodiment, the bottom end of the gum strip **185** is disposed between the first abrasion **155** and the first turn up portion **150a** of the body ply **145.** In an alternative embodiment (not shown), the bottom end of the gum strip is disposed between the first abrasion and the first bead filler. In another alternative embodiment (not shown), the bottom end of the gum strip is disposed between the first abrasion and the sidewall rubber.

The gum strip **185** has substantially the same thickness throughout. In one embodiment, the gum strip **185** is only disposed on one side of the tire. The gum strip **185** may extend circumferentially about the tire, or it may be a single strip of material. In one known embodiment, the gum strip has a width of less than 4 centimeters. Where the gum strip is a strip of material, it may be desirable to employ multiple gum strips about the tire. In such case, each gum strip would have substantially the same orientation. For example, both a first and second gum strip could have a top end disposed between the body ply and the at least one cap ply insert and a bottom end located in the first bead region. Where two or more gum strips are employed on the same side of the tire, they may be spaced at equal intervals about the circumference of the tire, or they may be spaced at irregular intervals. In an alternative embodiment (not shown), gum strips are disposed on both sides of the tire.

The gum strip **185** is constructed of a relatively conductive compound that allows electric charge to leave tire **100.** The gum strip **185** has a volume resistivity between 1 × 10⁵ Ω-cm and 5 × 10⁵ Ω-cm. The gum strip has a 300% modulus of between 10-15 MPa. An exemplary gum strip also has an elongation strain at break of 400-450%, a tensile strain at break of 15-20 MPa, a tensile stress at break of 0.55-1 MPa and a picma tack of 12-16 N. However, it should be understood that these values are merely exemplary, and gum strips having other material properties may be employed.

In the illustrated embodiment, the antenna **180** is in direct contact with the cap ply insert **175,** which is in direct contact with the gum strip **185,** which is in direct contact with the first abrasion **155.** Thus, the antenna **180,** cap ply insert **175,** gum strip **185,** and the first abrasion **155** form a conductive path from the ground to a wheel. In alternative embodiments (not shown), other layers or tire components are located between some of the above-identified elements. In other words, the above-identified elements may be in indirect contact with each other. In another alternative embodiment (not shown), the antenna is omitted, and the conductive path leads from the abrasion, to the gum strip, to the cap ply insert, to the circumferential tread of the tire

As one of ordinary skill in the art would understand, the tire embodiments described in this disclosure may be configured for use on a vehicle selected from the group consisting of motorcycles, tractors, agricultural vehicles, lawnmowers, golf carts, scooters, airplanes, military vehicles, passenger vehicles, hybrid vehicles, high-performance vehicles, sport-utility vehicles, light trucks, heavy trucks, heavy-duty vehicles, and buses. One of ordinary skill in the art would also understand that the embodiments described in this disclosure may be utilized with a variety of tread patterns, including, without limitation, symmetrical, asymmetrical, directional, studded, and stud-less tread patterns. One of ordinary skill in the art would also understand that the embodiments described in this disclosure may be utilized, without limitation, in high-performance, winter, all-season, touring, non-pneumatic, and retread tire applications.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the invention, in its broader aspects, is not limited to the specific details, the representative apparatus and method, and illustrative examples shown and described.

## Claims

1. A tire (100) comprising:
a pair of bead regions (105a, 105b), including a first bead region (105a) and a second bead region (105b);
a pair of sidewall regions (120a, 120b), including a first sidewall region (120a) disposed above the first bead region (105a) and a second sidewall region (120b) disposed above the second bead region (105b);
a crown region (130) extending from the first sidewall region (120a) to the second sidewall region (120b);
at least one body ply (145) extending from the first bead region (105a), through the pair of sidewall regions (120a, 120b) and crown region (130), to the second bead region (105b);
at least one circumferential belt (160) in the crown region (130), disposed radially above the at least one body ply (145);
at least one cap ply (170) in the crown region (130), disposed radially above the at least one circumferential belt (160);
at least one cap ply insert (175),
wherein the at least one cap ply insert (175) has a center portion disposed radially above the at least one circumferential belt (160),
wherein the at least one cap ply insert (175) has a pair of end portions including a first end portion and a second end portion, each of the pair of end portions extending radially below the at least one circumferential belt (160), and
a gum strip (185) at least partially disposed in the first sidewall region (120a),
wherein the gum strip (185) has a top end disposed between the at least one body ply (145) and the at least one cap ply insert (175) and a bottom end located in the first bead region (105a), **characterized in that**,
the cap ply insert (175) has a volume resistivity between 4 x 10⁷ Ω-cm and 7 x 10⁷ Ω-cm,
the gum strip (185) has a volume resistivity between 1 × 10⁵ Ω-cm and 5 × 10⁵ Ω-cm, and
the gum strip (185) has a 300% modulus of between 10-15 MPa.

2. The tire (100) of claim 1, wherein the first bead region (105a) includes a first bead core (110a) and a first bead filler (115a), wherein the second bead region (105b) includes a second bead core (110b) and a second bead filler (115b), and wherein the bottom end of the gum strip (185) is located radially below a top end of the first bead filler (115a).

3. The tire (100) of claim 2, wherein the first bead region (105a) further includes a first abrasion (155), wherein the second bead region (105b) includes a second abrasion (155), and wherein the bottom end of the gum strip (185) is disposed axially between the at least one body ply (145) and the first abrasion.

4. The tire (100) of claim 1, wherein a middle section of the gum strip (185) is disposed between the at least one body ply (145) and a rubber portion of the first sidewall region (120a).

5. The tire (100) of claim 1, wherein the gum strip (185) has a width of less than 4 centimeters.

6. The tire (100) of claim 1, further comprising a second gum strip at least partially disposed in the first sidewall region (120a), the second gum strip having a top end disposed between the at least one body ply (145) and the at least one cap ply insert (175) and a bottom end located in the first bead region (105a).

7. The tire (100) of claim 1, wherein the second sidewall region (120b) does not include a gum strip (185).

8. The tire (100) of claim 2, further comprising a first abrasion (155) that at least partially wraps around the first bead core (110a) and a second abrasion that at least partially wraps around the second bead core (110b).

9. The tire (100) of claim 1, wherein the cap ply (170) has a cap ply width greater than the belt width and less than the cap ply insert width.

10. The tire (100) of claim 1, wherein the top end of the gum strip (185) is in contact with the cap ply insert (175).

11. The tire (100) of claim 1, wherein the at least one cap ply insert (175) extends into the pair of sidewall regions (120a, 120b).

12. The tire (100) of claim 1, further comprising an antenna (180) disposed in the crown region (130), the antenna (180) having a resistivity of between 1 × 10⁵ Ω-cm and 4 × 10⁵ Ω-cm.

## Patentansprüche

1. Reifen (100), umfassend:
ein Paar Wulstbereiche (105a, 105b), einschließlich eines ersten Wulstbereichs (105a) und eines zweiten Wulstbereichs (105b);
ein Paar Seitenwandbereiche (120a, +120b), einschließlich eines ersten Seitenwandbereichs (120a), der über dem ersten Wulstbereich (105a) angeordnet ist, und eines zweiten Seitenwandbereichs (120b), der über dem zweiten Wulstbereich (105b) angeordnet ist;
einen Scheitelbereich (130), der sich von dem ersten Seitenwandbereich (120a) zum zweiten Seitenwandbereich (120b) erstreckt;
mindestens eine Körperlage (145), die sich von dem ersten Wulstbereich (105a) durch das Paar Seitenwandbereiche (120a, 120b) und den Scheitelbereich (130) zum zweiten Wulstbereich (105b) erstreckt;
mindestens einen Umfangsgürtel (160) im Scheitelbereich (130), der radial über der mindestens einen Körperlage (145) angeordnet ist;
mindestens eine Decklage (170) im Scheitelbereich (130), die radial über dem mindestens einen Umfangsgürtel (160) angeordnet ist;
mindestens eine Decklageneinlage (175),
wobei die mindestens eine Decklageneinlage (175) einen mittleren Abschnitt aufweist, der radial über dem mindestens einen Umfangsgürtel (160) angeordnet ist,
wobei die mindestens eine Decklageneinlage (175) ein Paar Endabschnitte aufweist, die einen ersten Endabschnitt und einen zweiten Endabschnitt einschließen, wobei sich jeder Paar Endabschnitte radial unter den mindestens einen Umfangsgürtel (160) erstreckt, und
einen Gummistreifen (185), der mindestens teilweise in dem ersten Seitenwandbereich (120a) angeordnet ist,
wobei der Gummistreifen (185) ein oberes Ende, das zwischen der mindestens einen Körperlage (145) und der mindestens einen Decklageneinlage (175) angeordnet ist, und ein unteres Ende, das sich in dem ersten Wulstbereich (105a) befindet, aufweist, **dadurch gekennzeichnet, dass**
die Decklageneinlage (175) einen spezifischen Durchgangswiderstand zwischen 4 x 10⁷ Ω-cm und 7 x 10⁷ Ω-cm aufweist, der Gummistreifen (185) einen spezifischen Durchgangswiderstand zwischen 1 x 10⁵ Ω-cm und 5 x 10⁵ Ω-cm aufweist, und
der Gummistreifen (185) einen 300 %-Modul zwischen 10-15 MPa aufweist.

2. Reifen (100) nach Anspruch 1, wobei der erste Wulstbereich (105a) einen ersten Wulstkern (110a) und einen ersten Wulstfüller (115a) einschließt, wobei der zweite Wulstbereich (105b) einen zweiten Wulstkern (110b) und einen zweiten Wulstfüller (115b) einschließt und wobei das untere Ende des Gummistreifens (185) radial unterhalb eines oberen Endes des ersten Wulstfüllers (115a) angeordnet ist.

3. Reifen (100) nach Anspruch 2, wobei der erste Wulstbereich (105a) ferner einen ersten Abrieb (155) einschließt, wobei der zweite Wulstbereich (105b) einen zweiten Abrieb (155) einschließt, und wobei das untere Ende des Gummistreifens (185) axial zwischen der mindestens einen Körperlage (145) und dem ersten Abrieb angeordnet ist.

4. Reifen (100) nach Anspruch 1, wobei ein mittlerer Abschnitt des Gummistreifens (185) zwischen der mindestens einen Körperlage (145) und einem Kautschukabschnitt des ersten Seitenwandbereichs (120a) angeordnet ist.

5. Reifen (100) nach Anspruch 1, wobei der Gummistreifen (185) eine Breite von weniger als 4 Zentimetern aufweist.

6. Reifen (100) nach Anspruch 1, ferner umfassend einen zweiten Gummistreifen, der mindestens teilweise in dem ersten Seitenwandbereich (120a) angeordnet ist, wobei der zweite Gummistreifen ein oberes Ende, das zwischen der mindestens einen Körperlage (145) und dem mindestens einen Decklageneinlage (175) angeordnet ist, und ein unteres Ende, das sich in dem ersten Wulstbereich (105a) befindet, aufweist.

7. Reifen (100) nach Anspruch 1, wobei der zweite Seitenwandbereich (120b) keinen Gummistreifen (185) einschließt.

8. Reifen (100) nach Anspruch 2, ferner umfassend einen ersten Abrieb (155), der sich mindestens teilweise um den ersten Wulstkern (110a) wickelt, und einen zweiten Abrieb, der sich mindestens teilweise um den zweiten Wulstkern (110b) wickelt.

9. Reifen (100) nach Anspruch 1, wobei die Decklage (170) eine Decklagenbreite aufweist, die größer als die Gürtelbreite und kleiner als die Decklageneinlagebreite ist.

10. Reifen (100) nach Anspruch 1, wobei das obere Ende des Gummistreifens (185) mit der Decklageneinlage (175) in Kontakt steht.

11. Reifen (100) nach Anspruch 1, wobei sich die mindestens eine Decklageneinlage (175) in das Paar Seitenwandbereiche (120a, 120b) erstreckt.

12. Reifen (100) nach Anspruch 1, ferner umfassend eine Antenne (180), die in dem Scheitelbereich (130) angeordnet ist, wobei die Antenne (180) einen spezifischen Widerstand zwischen 1 x 10⁵ Ω-cm und 4 x 10⁵ Ω-cm aufweist.

## Revendications

1. Pneu (100) comprenant :
une paire de régions de talon (105a, 105b), incluant une première région de talon (105a) et une deuxième région de talon (105b) ;
une paire de régions de flanc (120a, 120b), incluant une première région de flanc (120a) disposée au-dessus de la première région de talon (105a) et une deuxième région de flanc (120b) disposée au-dessus de la deuxième région de talon (105b) ;
une région de sommet (130) s'étendant de la première région de flanc (120a) à la deuxième région de flanc (120b) ;
au moins une nappe carcasse (145) s'étendant de la première région de talon (105a), par l'intermédiaire de la paire de régions de flanc (120a, 120b) et de la région de sommet (130), à la deuxième région de talon (105b) ;
au moins une ceinture circonférentielle (160) dans la région de sommet (130), disposée radialement au-dessus de l'au moins une nappe carcasse (145) ;
au moins une nappe de sommet (170) dans la région de sommet (130), disposée radialement au-dessus de l'au moins une ceinture circonférentielle (160) ;
au moins un insert de nappe de sommet (175),
dans lequel l'au moins un insert de nappe de sommet (175) a une partie centrale disposée radialement au-dessus de l'au moins une ceinture circonférentielle (160),
dans lequel l'au moins un insert de nappe de sommet (175) a une paire de parties d'extrémité incluant une première partie d'extrémité et une deuxième partie d'extrémité, chacune parmi la paire de parties d'extrémité s'étendant radialement en dessous l'au moins une ceinture circonférentielle (160), et
une bandelette de gomme (185) disposée au moins partiellement dans la première région de flanc (120a),
dans lequel la bandelette de gomme (185) a une extrémité supérieure disposée entre l'au moins une nappe carcasse (145) et l'au moins un insert de nappe de sommet (175) et une extrémité inférieure située dans la première région de talon (105a), **caractérisé en ce que,**
l'insert de nappe de sommet (175) a une résistivité volumique entre 4 x 10⁷ Ω-cm et 7 x 10⁷ Ω-cm,
la bandelette de gomme (185) a une résistivité volumique entre 1 x 10⁵ Ω-cm et 5 x 10⁵ Ω- cm, et
la bandelette de gomme (185) a un module à 300 % compris entre 10 et 15 MPa.

2. Pneu (100) selon la revendication 1, dans lequel la première région de talon (105a) inclut une première tringle de talon (110a) et un premier bourrage sur tringle (115a), dans lequel la deuxième région de talon (105b) inclut une deuxième tringle de talon (110b) et un deuxième bourrage sur tringle (115b), et dans lequel l'extrémité inférieure de la bandelette de gomme (185) se situe radialement en dessous d'une extrémité supérieure du premier bourrage sur tringle (115a).

3. Pneu (100) selon la revendication 2, dans lequel la première région de talon (105a) inclut en outre une première abrasion (155), dans lequel la deuxième région de talon (105b) inclut une deuxième abrasion (155), et dans lequel l'extrémité inférieure de la bandelette de gomme (185) est disposée axialement entre l'au moins une nappe carcasse (145) et la première abrasion.

4. Pneu (100) selon la revendication 1, dans lequel une section médiane de la bandelette de gomme (185) est disposée entre l'au moins une nappe carcasse (145) et une partie de caoutchouc de la première région de flanc (120a).

5. Pneu (100) selon la revendication 1, dans lequel la bandelette de gomme (185) a une largeur inférieure à 4 centimètres.

6. Pneu (100) selon la revendication 1, comprenant en outre une deuxième bandelette de gomme disposée au moins partiellement dans la première région de flanc (120a), la deuxième bandelette de gomme ayant une extrémité supérieure disposée entre l'au moins une nappe carcasse (145) et l'au moins un insert de nappe de sommet (175) et une extrémité inférieure située dans la première région de talon (105a).

7. Pneu (100) selon la revendication 1, dans lequel la deuxième région de flanc (120b) n'inclut pas de bandelette de gomme (185).

8. Pneu (100) selon la revendication 2, comprenant en outre une première abrasion (155) qui s'enveloppe au moins partiellement autour de la première tringle de talon (110a) et une deuxième abrasion qui s'enveloppe au moins partiellement autour la deuxième tringle de talon (110b).

9. Pneu (100) selon la revendication 1, dans lequel la nappe de sommet (170) a une largeur de nappe de sommet supérieure à la largeur de ceinture et inférieure à la largeur d'insert de nappe de sommet.

10. Pneu (100) selon la revendication 1, dans lequel l'extrémité supérieure de la bandelette de gomme (185) est en contact avec l'insert de nappe de sommet (175).

11. Pneu (100) selon la revendication 1, dans lequel l'au moins un insert de nappe de sommet (175) s'étend dans la paire de régions de flanc (120a, 120b).

12. Pneu (100) selon la revendication 1, comprenant en outre une antenne (180) disposée dans la région de sommet (130), l'antenne (180) ayant une résistivité comprise entre 1 x 10⁵ Ω-cm et 4 x 10⁵ Ω-cm.
